# EUROPEAN PATENT SPECIFICATION

(11) **EP 2 556 878 B1**
(45) Date of publication and mention of the grant of the patent: **31.05.2017**
(21) Application number: 11177424.6
(22) Date of filing: 12.08.2011
(51) Int. Cl.: B01D 53/30, B01D 53/50, B01D 53/68, B01D 46/02, C25C 3/22

(54) **A filter device comprising a system for detecting a local operation condition in an individual filter unit or in a group of filter units and corresponding method**
Filtervorrichtung mit System zur Erkennung einer lokalen Betriebsbedingung in einer individuellen Filtereinheit oder einer Gruppe von Filtereinheiten und entsprechendes Verfahren
Dispositif de filtration comprenant un système de détection d'une condition de fonctionnement local dans une unité de filtration individuel ou dans un groupe d'unités de filtration et procédé correspondant

(43) Date of publication of application: 13.02.2013
(73) Proprietor: General Electric Technology GmbH, 5400 Baden (CH)
(72) Inventor: Larsson, Mikael, SE-431 44 Mölndal (SE)
(74) Representative: General Electric Technology GmbH

(56) References cited:
- EP-A1- 2 177 254
- EP-A1- 2 181 753
- WO-A1-2011/124885
- US-A- 5 505 766
- US-A1- 2005 084 976
- US-A1- 2010 024 639

## Description

### Field of the Invention

The present invention relates to a filter device and a method using the filter device to detect a local operation condition in an individual filter section or in a group of filter sections in a filter device.

### Background of the Invention

During certain operations such as in power plants, in aluminium production or in waste incineration, a process gas containing gaseous pollutants such as sulphur dioxide or hydrochloric acid, is generated. Such gaseous pollutants must be removed before releasing the process gas into the ambient air. Depending on the type of operation producing the process gas, it might also to be of interest to remove dust particles therefrom.

One way of removing pollutants and/or dust particles from a process gas is by using a filter device, e.g., known from US 4 336 035, comprising a plurality of bag filters. The general principle of such a filter device is that dust, dirt or other types of particulates collect as a cake on the surface of the individual bag filters as the process gas passes there through and is thereby "cleaned".

To allow cleaning of the bag filters it is known to use a pulse cleaning system, also in general known from US 4 336 035. As described in US 4 336 035, a pulse of highly compressed air is directed into bag filters to create a jet pulse that operates as a back flush to remove particulate cakes from the exterior surfaces of the bag filters. Thus, by using a pulse cleaning system, the bag filters can be cleaned without interrupting normal filter flow.

Typically, an industrial filter device of this type contains several hundreds or even several thousands of bag filters, making it hard to detect the presence of and identify the position of an individual malfunctioning bag filter.
EP 2 181 753 discloses a gas cleaning system designed for removing hydrogen fluoride from a process gas. The gas cleaning system comprises a scrubbing chamber for mixing the process gas with particulate alumina, and a filter device located downstream of the scrubbing chamber. A sulphur dioxide measurement device measures the amount/concentration of sulphur dioxide present in the process gas downstream of the filter device, i.e., when the process gas has left the filter device. A controller is operatively connected to the sulphur dioxide measurement device for utilizing the measured amount/concentration of sulphur dioxide to evaluate the efficiency of the gas cleaning system. Accordingly, this system measures a parameter and thereby evaluates the performance of the filter device as one complete unit, thus making it possible to ensure that emission limits established by local governmental authorities are not exceeded. Once the concentration of gaseous pollutants exiting the filter device is deemed to reach a pre-set limit indicating that the filter device as such is malfunctioning, the complete system is shut down and a difficult, time consuming and expensive maintenance procedure must be initiated.

WO 2011/124885 A1 describes a flue or process gas cleaning system. The gas cleaning system comprises a baghouse filter device comprising at least two banks of filter bags. Valves enable each bank of filters to be isolated from the hot gas flow path. The need for cleaning the bag filters is monitored by a controller using the signals of pressure sensors upstream and downstream of the filter bank.

US 5, 505, 766 describes a gas cleaning system designed for removing hydrogen fluoride from a process gas. The gas cleaning system comprises a baghouse filter device with several compartments. Downstream the baghouse filter device a sensor permits monitoring the mercury level in the cleaned flue gas. A controller is programmed to that once the mercury removal level falls below a predetermined amount this specific compartment is taken off line an cleaned.

### Summary of the Invention

The present invention allows detection of a local operation condition in an individual filter unit or in a group of filter units in an interior of a filter device. The local operation condition can refer to the ability to remove gaseous pollutants from a process gas, which are generated by way of example during aluminium production or during incineration. Examples of such gaseous pollutants are sulphur dioxide and hydrochloric acid.

The present invention makes it possible to carefully plan operation downtime and system maintenance.

Further, the present invention makes it possible to enhance control of any supply of absorbent material before, inside or in connection to an inlet of a filter device, which absorbent material can be supplied for reaction with gaseous pollutants to reduce concentrations of gaseous pollutants in a process gas while the process gas passes through the filter device.

According to one aspect the present invention is a filter device according to the features of claim 1.

As used herein, the term "local operation condition" refers to an individual filter section's ability to remove at least one gaseous pollutant from a process gas at a particular point in time. Non-limiting examples of such gaseous pollutants found in process gases are sulphur dioxide (SO₂) and hydrochloric acid (HCl). Pollutant laden process gas can be generated by way of example during the production of aluminium from alumina or during incineration.
Further, each individual filter section of a filter device comprises one or more filter units, such as filter bags. The one or several filter sections are arranged in one common filter housing of the filter device. As such, the present system is equipped to collect and evaluate measurement information regarding concentrations of at least one gaseous pollutant at one or more points inside the filter device in order to thereby determine the local operation condition(s) and to use the local operation condition information to control the operation of the filter device.

The subject system can comprise at least one sensor operative for measuring concentrations of gaseous pollutants in at least one measuring point in an individual filter section. Depending on the number of measuring points in view of the number of filter sections, it is possible to get measurement information pertinent to the local operation condition of an individual filter section, as well as that of an individual filter unit located therein, depending on the level of system operation condition identification accuracy desired. In the case of several hundreds or even several thousands of filter units in a filter device, it might be deemed a sufficient level of identification accuracy to know the area of the filter device exhibiting a low operation condition and hence possibly an operational problem. In other cases, it might be of interest to identify any filter unit or area in the filter device exhibiting a low operation condition.

The number of sensors required can be determined based on factors such as type of sensor used, complexity of the controller, level of desired control and the temperature of the process gas inside the filter device. It is important to note that, depending on the type of sensor used, the number of sensors utilized within the filter device does not have to correspond to the number of desired measuring points.

Further, through the use of the subject system to monitor and/or control local operation conditions in an individual filter section, system downtime and maintenance may be carefully planned. Likewise, the subject system allows for monitoring and data input as desired for control of any required cleaning operations within the system.

Further, the subject system can be used for data to control any supply of absorbent material to the polluted process gas side of the filter device for reaction with the process gas pollutant(s) passing therethrough. The subject system can also be used as a source of data for controlling the flow of polluted process gas to portions of the filter device with more desirable operation conditions, e.g., better cleaning capacity. In cases where the system includes a pulse cleaning system, the present inventive system can be used for data to control such pulse cleaning system, such as by way of example, to control the pulse strategy. The pulse strategy can by way of example be the length of time or intervals between pulses, the force or power of the pulses, or even the determination to stop or quit pulsing.

Above, a number of non-limiting examples have been provided to describe various uses of the sensor data collected by the system. The examples provided herein are not exhaustive, with the breadth of possible uses of the collected sensor data to a large extent only limited by the complexity of the controller used.

According to one embodiment, at least one measuring point is in a clean gas area of the filter device. The clean gas area is downstream with respect to process gas flow of a filtering portion of the filter device.

According to one embodiment, the controller is operable to compare measurement to a reference value. The reference value if desired can be indicative of an expected concentration of the at least one gaseous pollutant. As such, the measurement information as it compares to the reference value, may be used to determine the required level of reactivity needed of any absorbent material supplied to the polluted process gas area of said filter device.The comparison of the measurement information to the reference value can be used to indicate at least the following three operation conditions: measurement information comparable to reference value indicates normal operation - no action required; measurement information somewhat higher than reference value indicates operational deficiency - determine need for and/or timing of any future action; measurement information significantly higher than reference value indicates possible local operational default - determine need for immediate action or any action in the near future. It is to be understood that the examples provided herein are non-limiting examples to illustrate how the outcome of the comparison between the measurement information and reference value made by the controller can be prosecuted thereby.

According to yet another embodiment, the system can further comprise a pulse cleaning system for cleaning individual filter sections by applying at least one cleaning pulse of air, wherein the at least one sensor measures a concentration of at least one gaseous pollutant for activation of said pulse cleaning system.

According to one embodiment, the pulse cleaning system can provide a cleaning pulse of air to each of at least two filter sections, whereby said controller determines the local operation condition of a cleaned first individual filter section before initiating the pulse cleaning system to provide a cleaning pulse of air to a second individual filter section.

Depending on how the controller is utilized and operated, the measured concentration of process gas pollutant can be used and/or evaluated immediately or at a later time, e.g., when the cleaning of the filter device is completed.

According to another aspect there is a method for detecting local operation conditions in an individual filter section of a filter device according to the features of claim 5. To avoid undue repetition, advantages of the present method parallel those described above with regard to the subject system are provided.

According to one method embodiment, measurement information of the measured concentration of the at least one gaseous pollutant is compared to a reference value. The reference value can be indicative of an expected concentration of the at least one gaseous pollutant. As such, the measurement information as it compares to the reference value, may be used to determine the required level of reactivity needed of any absorbent material supplied to the polluted process gas area of said filter device.

According to another method embodiment, the method can further comprise cleaning an individual filter section by operating a pulse cleaning system, the pulse cleaning being performed before measuring the concentration of the gaseous pollutant in the individual filter section.

According to another embodiment, the pulse cleaning system can be operated to apply a cleaning pulse of air to a first filter section, with said sensor operated to measure the concentration of gaseous pollutant in the first filter section, before subjecting a subsequent filter section to a cleaning pulse.

According to another method embodiment, the method can further comprise controlling a supply of absorbent material to the filter device based on the measurement information.

Such absorbent material supply control can be based on, by way of non-limiting example, insufficient reactivity between the at least one gaseous pollutant and the absorbent material supplied as detected as a locally increased concentration of gaseous pollutants at a measuring point.

The above described systems, methods and features thereof are further explained by the following figures and detailed description.

### Brief Description of the Drawings

Referring now to the figures, which are exemplary embodiments wherein like elements are numbered alike:
Fig. 1 is a schematic illustration of a gas cleaning system according to prior art.
Fig. 2a is a schematic side view of a filter device.
Fig. 2b is a schematic side view of a filter section comprising more than one or more filter units.
Fig. 3 is a schematic top view illustrating a partition wall as seen from above.
Fig. 4 is a schematic top view of the partition wall for the purpose of illustrating a grouping of filter units.
Fig. 5 is a schematic cross section of a filter device equipped with a pulse cleaning system.
Fig. 6 is a schematic cross section of a filter device illustrating one embodiment which is not part of the present invention using a pulse cleaning system.
Fig.6a is a schematic cross section of the filter device of Fig. 6 to illustrate the use of peripheral measuring points.
Fig. 7 is a schematic illustration of a collector used in accordance with an embodiment of the present invention.
Fig. 8 is a flow chart illustration of a method according to the present invention.

### Description of preferred embodiments

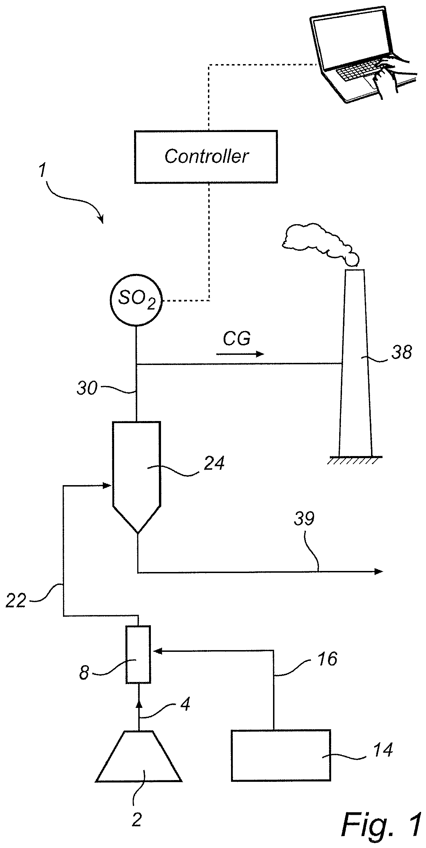

For purposes of better understanding the applicability of the present invention, a typical gas cleaning system 1 is illustrated in Fig 1. The gas cleaning system 1 is operative for removing gaseous pollutants and dust particles from a process gas generated during an electrolytic reduction process for producing aluminium from alumina. In such an electrolytic reduction process, alumina is treated in a pot, not shown, generating a process gas containing gaseous pollutants, such as for example hydrogen fluoride and dust particles. The process gas thus generated is collected by a collector 2 and flows via a duct 4 to a scrubbing chamber 8. Fresh alumina is transported from storage 14 via pipe 16 to scrubbing chamber 8 where the alumina is mixed with the process gas. The mixture of fresh alumina and process gas flows via duct 22 to fabric filter device 24. Fabric filter device 24, as is well known to those skilled in this art, allows a pollution laden process gas to pass through a fabric filter, which may be constructed in the form of a bag, and as such is often referred to as a bag filter. Particles entrained in the process gas passing through the fabric filter are captured on the fabric. One non-limiting example of a bag-type fabric filter is illustrated in US 4,336,035. The gaseous pollutants entrained in the process gas include hydrogen fluoride, HF, and sulphur dioxide, SO₂. Hydrogen fluoride and sulphur dioxide react with the alumina in scrubbing chamber 8 to form a solid reaction product. The reactions between the alumina and the gaseous pollutants entrained in the process gas also occur on the fabric surfaces of the fabric filter device 24. Fabric filter device 24 includes a clean gas duct 30 to channel the flow of cleaned process gas (CG) to stack 38 from which the cleaned process gas is emitted into the ambient air. The particles captured in fabric filter device 24 are removed from the fabric surfaces of the fabric filter device 24 and returned via transport system 39 to the aluminium production units (not shown) in Fig. 1.

In addition to an aluminium production plant, the present inventive system is also useful with regard to a combustion plant (not shown) for incineration of a fuel such as coal, oil, peat, waste and/or the like. Such a combustion plant can be a power plant or a waste incineration plant wherein a hot process gas is generated containing among other components, gaseous pollutants, such as hydrogen chloride, HCl, and sulphur oxides, SOₓ, such as sulphur dioxide, SO₂.

When separating gaseous pollutants such as hydrochloric acid and sulphur dioxide from hot process gas, a method is frequently used that includes introducing a lime-containing absorbent material into the pollutant laden process gas to react with the gaseous pollutants. When the absorbent material reacts with the gaseous pollutants, the gaseous pollutants are converted chemically and/or physically into dust, which is then separated using a fabric filter.

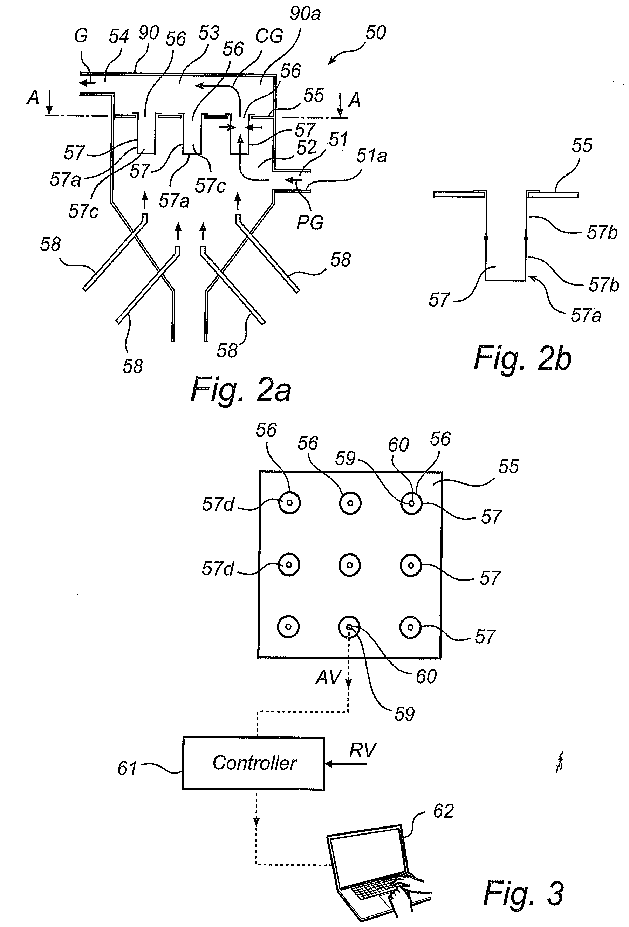

Now referring to Fig. 2a, a filter device 50 forming part of a system is described. Filter device 50 corresponds to a commonly used bag-type filter, e.gdisclosed in US 4 336 035, incorporated herein by reference.

Filter device 50 comprises housing 90 with an interior inlet zone 52 through which pollutant laden process gas (PG) flows via inlet 51 a. Inlet 51 a is fluidly connected to a conduit such as conduit 22 illustrated in Fig. 1. Further, filter device 50 includes an interior outlet zone 53, through which cleaned process gas (CG) flows from housing 90 via outlet 54. Outlet 54 is fluidly connected to a conduit such as conduit 30 illustrated in Fig. 1. Inlet zone 52 is physically separated from outlet zone 53 within interior 90a of housing 90 by partition wall 55. Inlet zone 52 is a pollutant laden process gas zone (a PG zone), whereas outlet zone 53 is a cleaned process gas zone (a CG zone).

Partition wall 55 has a plurality of through openings 56. Each opening 56 contains a filter section 57. Typically, an industrial filter device 50 contains a very large number of filter sections 57, e.g., several hundreds or thousands. However, Fig. 2a schematically illustrates three filter sections 57, each in the form of a filter bag 57a. Each filter section 57 is typically used in combination with a filter cage (not shown). Filter cages serve to support filter bags 57a to prevent filter bag 57a collapse. As such, a filter cage fits within opening 56 of partition wall 55 and extends from partition wall 55 into filter bag 57a and into inlet zone 52. Further, each individual filter section 57 can comprise one or more filter units 57b, see Fig. 2b, interlocked circular end to circular end so as to increase the overall length thereof to support the full length of filter bag 57a.

The subject system as described below is based on a filter section 57 in the form of a filter bag 57a, although it is to be understood that the subject inventive system is applicable to any number of filter section 57 designs.

In a case where filter device 50 is connected to a system that uses an absorbent material introduced in the process gas, PG, to react with gaseous pollutants therein, the absorbent material is supplied together with the polluted process gas PG to inlet zone 51. The absorbent material can by way of example be supplied via one or several fluidly connected inlets 58 arranged in inlet zone 51. It is to be understood that as an alternative, it is possible to supply an absorbent material to the system at a point upstream or before filter device 50.

As such, the polluted process gas PG flows into filter section 57 on its passage through filter device 50. Within filter device 50, dust, dirt or other types of particulates collect as a caked material on an exterior surface 57c of individual filter sections 57 as the process gas PG passes therethrough. Absorbent material mixed with the polluted process gas PG likewise accumulates as a caked material on exterior surface 57c of filter sections 57 extending within interior 51 a of inlet zone 51.
Fig. 3 illustrates a cross section taken along line A-A of filter section 57 of Fig. 2. The cross section of Fig. 3 illustrates a top view of partition wall 55. To facilitate understanding, a top view of nine filter sections 57 are illustrated in openings 56 of partition wall 55. Openings 56, with filter sections 57, are arranged through partition wall 55 in a geometrical pattern, such as for example in the form of three rows of three columns. It is to be understood that any other pattern is possible no matter if it is a geometrical or a random pattern.

One measuring point 59 comprising at least one sensor 60 is positioned relative to each filter section 57. Sensor 60 is positioned in interior 57d of filter section 57 and is operable to communicate with a controller 61 arranged outside or separate from filter device 50. To facilitate understanding, Fig. 3 only illustrates via a dashed line, communication between one sensor 60 and controller 61. However, it is to be understood that each sensor 60 communicates with controller 61 and such communication can be wire based or wireless. Also, it is to be understood that controller 61 can as an alternative be arranged within or as a part of filter device 50.

Controller 61 can be operatively connected to a plant control display 62. A plant operator (not shown) may watch the plant control display 62 so as to monitor and to act as necessitated based on the detected local operation conditions.

During operation of filter device 50, at least one sensor 60 is positioned at a measuring point 59 to measure the concentration of at least one gaseous pollutant at said measuring point 59. Measurement information can be obtained by measuring continuously or at pre-set intervals. It is also to be understood that depending on the complexity of sensor 60 and controller 61, other parameters could likewise be measured and evaluated.

Using the subject system, measurement information may be collected concerning the concentration of a specific gaseous pollutant at a desired measuring point 59 at one or more specific points in time. This measurement information is communicated as a signal to controller 61 for evaluation and identification of local operation conditions. More precisely, the signal received by controller 61 is compared to at least one pre-set reference value RV for the purpose of identifying the local operation condition at the specific measuring point 59. Reference value RV is intended to correspond to the highest expected concentration of at least one gaseous pollutant expected to be present in the cleaned process gas CG during normal filter device 50 operation, and under actual conditions existing at the time of measuring. By way of example, a local operation condition can refer to a desired level of removal of at least one gaseous pollutant by filter section 57 with regard to a specific measuring point 59 and point in time. The local operation condition can also refer to other local operation conditions, such as a need to change conditions in inlet zone 51 by increasing or decreasing any supply of absorbent material to inlet zone 51, or a need to perform maintenance on a specific filter section 57. By way of example, through several inlets 58 absorbent material is supplied to inlet zone 51. Actual amount of supply of absorbent material through individual inlets 58 can vary. It can also refer to control over a pulse strategy in any system pulse cleaning. Such control of a pulse strategy can by way of example be the intervals between pulses of forced air, the force or power of the air pulses, or even termination of or quitting pulsing.

Given that a local operation condition is monitored and evaluated for the purpose of removing at least one gaseous pollutant from a process gas, by measuring the concentration of a gaseous pollutant at a measuring point 59 on the clean side or in the interior 57d of a filter section 57, the following non-limiting examples are provided.

According to one example, if upon evaluation, a comparison between the measurement information or actual value, AV, i.e., the concentration of gaseous pollutant, and the reference value, RV, proves the actual value to be lower than the reference value, such indicates that filter section 57 at the corresponding measuring point 59 is working properly. In other words, the local operation condition is determined to be in accordance with preset requirements.

According to another example, if upon evaluation, a comparison between AV and RV proves AV is close to or even corresponds to RV, such indicates that filter section 57 at the corresponding measuring point 59 is working properly at the moment but a malfunction is to be expected. Such malfunction can by way of example be a clogging of the filter section 57 causing a pressure drop. Accordingly, the local operation condition is determined to be in accordance with preset requirements for the time being, but a malfunction should be expected and/or an activity to improve the operation condition, such as system maintenance, could/should be scheduled.

According to another example, if upon evaluation a comparison between AV and RV proves AV corresponds to or exceeds RV, such indicates that filter section 57 corresponding to the particular measuring point 59 is malfunctioning, i.e the local operation condition is not in accordance with preset requirements. This malfunctioning should call for an activity. Such activity can, depending on set requirements, call for e.g., immediate shut down of the filter device, maintenance of the specific filter section or shut down of the evaluated filter section while relying on the filtering capacity of adjacent filter sections. This malfunctioning should also call for a corresponding evaluation of the local operation conditions for adjacent filter sections, groups of filter sections, or even the complete filter device in order to estimate the influence of the individual malfunctioning filter section on the operation condition and capacity of the filter device as a whole.

As illustrated by Fig. 3 and described above, each measuring point 59 can be provided with a sensor 60, or one sensor can be dedicated to serve a plurality of measuring points 59.

Further, it is possible to arrange a measuring point 59 and a sensor 60 where desired, e.g., with a specific filter section 57 or a plurality of filter sections. Further, measuring point 59 can be arranged inside or outside a specific filter section. Also, the measuring point 59 can be positioned to obtain measurement information from a filter section 57 or a group of filter sections 57 while the sensor 60 or sensors 60 are positioned outside the filter device 50. A sensor 60 positioned outside the filter device 50 can be favourable when applying the subject inventive system in an incineration application where the temperatures inside the filter device 50 can be very high and possibly damaging to the sensor 60.
It is also to be understood that at least one measuring point 59 and a sensor 60 connected thereto can be arranged to obtain measurement information in the inlet zone 52. Measurement information from such measuring point 59 can be compared by the controller with measurement information received from a corresponding measuring point 59 and thereto connected sensor 60 used in the outlet zone 53.

A sensor 60 suitable to be used in connection to each measuring point 59, e.g., inside each filter section 57, is disclosed in US2005/0097941A1.

Another sensor 60 suitable to be used is the sensor 60 known as ULTRAMAT^{™} 23 commercially available from SIEMENS AG, Germany. This type of sensor 60 is preferably used where the number of sensors 60 can be limited and preferably can be arranged in a protected place, such as outside the filter device 50.

Sensors 60 should be suitable to detect sulphur dioxide and/or hydrochloric acid.

When the controller 61 detects, based on measurement of the concentration of a gaseous pollutant, that a problem in the local operation condition exists, an alarm message, which may comprise text and/or sound components, can be sent from the controller 61 to the plant control display 62 operatively connected thereto. A plant operator, who is watching the plant control display 62, is thus made aware of the fact that there is a local operating problem. In addition, the operator is also notified in which part of the filter device 50, i.e., in which measuring point 59 the problem appears to be located.

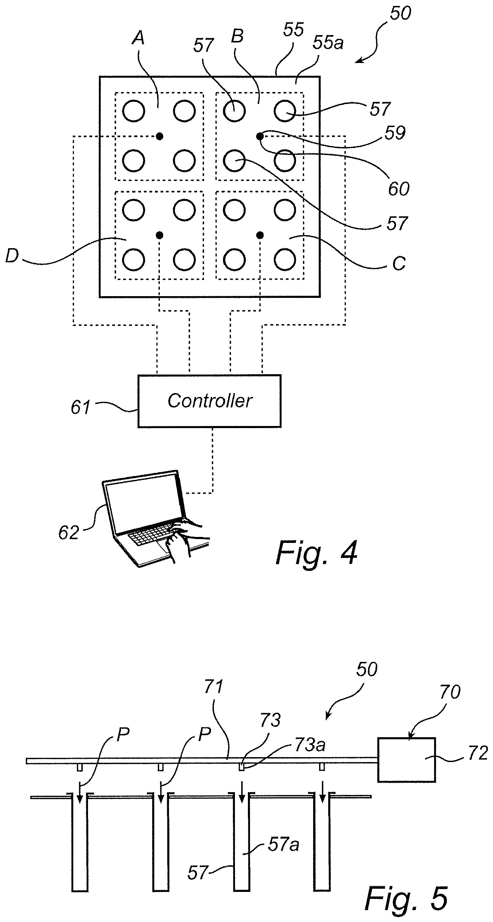

Now turning to Fig. 4, a top view of a horizontal cross section of a filter device 50 according to the type shown in Fig. 2 is shown highly schematically. The cross section of Fig. 4 provides a top view of the partition wall 55 comprising sixteen filter sections 57. This embodiment which is not part of the invention is useful to illustrate the principle of grouping of filter sections 57. The grouping can be made in a strict geometrical pattern, such as a rectangular, circular or polygon pattern, in order to cover the full upper surface 55a of partition wall 55 of filter device 50. The grouping can also be made in a more random pattern. Each sensor 60 can be provided with an identification number, identifying its position in the group or in the filter device 50.

For clarity of understanding, filter sections 57 in Fig.4 are grouped into four groups, i.e., A, B, C and D, each containing four filter sections 57. Each group is highlighted by dashed lines. Each group can comprise at least one measuring point 59 provided with at least one sensor 60. Each sensor 60 is dedicated to be operative to obtain measurement information for the concentration of at least one gaseous pollutant in an area covered by that specific measuring point 59.

A controller 61 of the type previously discussed is adapted to receive signals from the sensors 60. The controller 61 identifies the local operation condition of a specific group A, B, C, D of filter sections 57, rather than the local operation condition of a specific filter section 57 within that group. The latter possibility depends however on the number of sensors 60 /measuring points 59 used within a group. However, it is to be understood that depending on the complexity of the controller 61 used, signals from adjacent groups may be useful to identify and evaluate local operation conditions of individual filter sections 57 in adjacent groups based on, e.g., probability calculations.

Although the number of sensors 60 can be reduced by grouping the filter sections 57, it is still possible to identify, with a fair likelihood, which filter section 57, if any, has a malfunction by its local operation condition causing undesirable measurement information. Considering that an industrial filter device 50 comprises several hundreds or thousands of filter sections 57, it is still of good help to identify in which area of the filter device 50 that a malfunctioning filter section 57 is positioned. Grouping filter sections 57 in geometrical patterns further allows for simplified graphical or visual identification of the malfunctioning filter section 57 by the plant control display 62 connected to the controller 61.

It is to be understood that this general principle of grouping measuring points 59 and sensors 60 is applicable to a larger or smaller group of filter sections 57 than that described herein.

Now turning to Fig. 5, a schematic cross section side view of a filter device 50 of the type described above is illustrated. Filter device 50 is equipped with a pulse cleaning system 70. The pulse cleaning system 70 can operate using pressurized air, mechanical action or ultrasonic's. One such example of a pulse cleaning system 70 applicable with the present invention is disclosed in US 4 336 035.

The illustrated pulse cleaning system 70 comprises a pipe system 71 fluidly connected to a source 72 of compressed air. Pipe system 71 is most typically arranged in the clean air outlet zone 53 of the filter device 50 and is provided with a large number of nozzles 73, each nozzle 73 with its nozzle output 73a directed towards the interior 57a of each filter section 57. In operation, pulses P of pressurized air are blasted into the filter sections 57 in order to remove cake formations.

The illustrated pipe system 71 is provided with one nozzle 73 per filter section 57. By a non-illustrated valve systems arranged in pipe system 71 , the filter sections 57 can be cleaned individually, one at the time, group wise or all at the same time.

The cleaning can be preceded by measuring and assessing the local operation condition and/or be followed by the same. Such measuring and assessing is accomplished in the same manner as previously discussed. The assessment of the measurement information from an actual measured concentration as compared to a reference value RV is described further below.

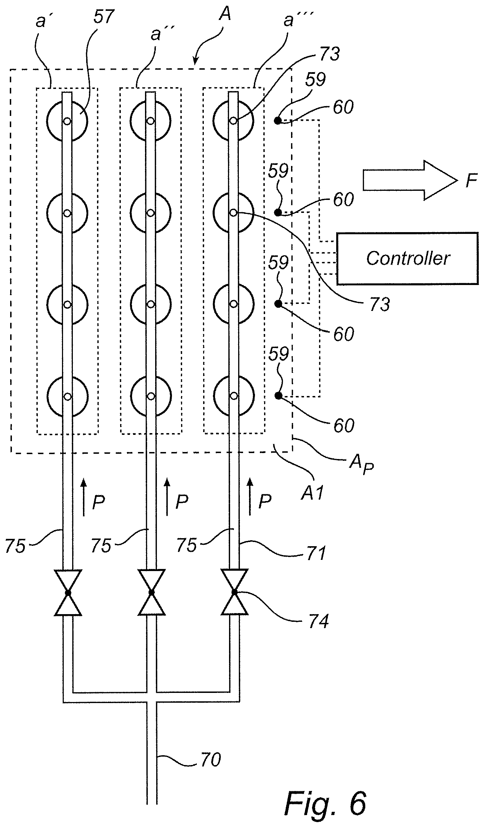

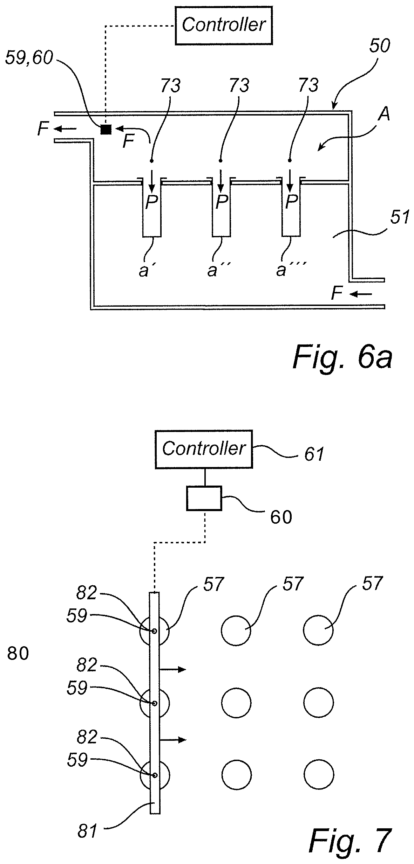

Now turning to Fig. 6, an embodiment which is not part of the present invention is illustrated in a top view having filter sections 57 divided into groups (only one group is shown labelled as group "A") and sub-groups a', a", a"'. As such, the local operation condition within group A is monitored with a more limited number of measuring points 59 than for each filter section 57.

To enhance understanding, each sub group a', a", a'" is represented by a row of filter sections 57. A number of measuring points 59, each comprising a sensor 60 is arranged along an edge A1 forming part of a periphery Ap of a group A of sub groups a', a" and a"'. In the embodiment, the number of measuring points 59 correspond to the number of filter sections 57 in each sub-group a', a" and a"'. Further, the pipe system 71 of the pulse cleaning system 70 is arranged with one pipe section 75 positioned to extend longitudinally along each sub group a', a" and a"'. Each pipe section 75 comprises a valve 74 and a number of nozzles 73 corresponding to the number of filter sections 57 in each sub group a', a" and a"'.

It is to be understood that the principle of this embodiment is also applicable if filter sections 57 in a plurality of adjacent rows are regarded as constituting a sub-group or if each filter section 57 in a row is considered individually. It is also to be understood that the number of measuring points 59 and/or sensors 60 can differ, e.g., be fewer in number than that of filter sections 57.

In order to assess the local operation condition of filter sections 57 contained in sub groups a', a" and a"', the pulse cleaning system 70 is operated to blast one or several consecutive high pressure air pulses P to the pipe section 75 dedicated to a particular sub-group. Such pulsing, as best illustrated in Fig. 6a, delivers a burst of air P having a main path of flow downwardly into each filter section 57 of each sub group a', a" and a"'. However, a side flow P' will also be generated by high pressure air pulses P having a path of flow across the main path of flow F moving through the filter device 50 from the inlet 52 to the outlet 54. Supposing sub-group a' in group A is subjected to a cleaning pulse blasting air pulses P into each filter section 57 at one and the same time, a side flow P' is thus generated across the main flow F through the filter device 50. The side flow P' will be detected by the one or several sensors 60 arranged in the one or several measuring points 59 along the periphery Ap of group A. By repeating this pulsing, sub-group by sub-group, it is possible to get information about the local operation condition in a specific sub-group a', a", or a'" within a group A.

The measurement information regarding the local operation condition thus collected can be combined any other type of desired measurements and assessed with regard to other conditions, e.g., opacity or the like.

During and/or after such pulsing, the sensors 60 dedicated to the measuring points 59 along the periphery Ap of group A receive signals suitable for assessment of the local operation conditions of the filter sections 57 in comprised in the pulsed sub group a', a" or a"'. The assessment is made by a controller 61 connected to or in communication with said sensors 60. The assessment can be made simultaneously with the pulsing or at a later stage or time. After filter section 57 cleaning and receipt of signals by controller 61 from sensors 60 from first pulsed sub group a', adjacent filter sections 57 of sub groups a" and a'" of filter sections 57 are likewise pulse cleaned sequentially. This pulsed cleaning process is repeated until the operation condition of the complete filter device 50 or the complete group A of sub-groups a', a" and a'" has been determined.

During cleaning of a filter section 57, no matter the method selected and no matter any grouping, the cake of particles of dust and the like that is formed under normal operation on the exterior surface 57a of filter sections 57 is removed. Removal of the cake of particles initially increases and enhances the permeability of the filter section 57 to the flow of process gas therethrough. Further, provided the filter device 50 is operated together with an absorbent material in the polluted gas zone 51, the cleaning will also remove the surface layer of absorbent material that during use successively will be formed on the exterior surface 57a of the filter section 57. This removal will likewise increase permeability, however it will also initially negatively affect the reactivity and thus the ability to reduce the concentration of gaseous pollutants in the process gas as the process gas passes through the filter section 57.

After cleaning, it will take some time for a sufficient layer of absorbent material to be re-built. The degree of absorbent material reactivity with pollutants will thus change within the operative cycle of a filter section 57 as seen from a newly cleaned filter section 57 to a filter section which is ready to be cleaned. This filtering operation fluctuation is also covered by the term "local operation condition" and can be monitored by a sensor 60 arranged in a measuring point 59 for a filter section 57.

Accordingly, the reference value RV or even a plurality of reference values RV used by the controller 61 are preferably set to accommodate for such normal variations to be expected during the operative life cycle of a filter section 57.

As such, the controller 61 should assess and signal any action required based on any abnormal measurement information obtained from said measuring points 59. By way of example, if a structural defect, such as a rupture, should occur on a filter section 57, an increased concentration of at least one gaseous pollutant measured by sensor 60 at measuring point 59 in connection to that filter section 57 would result in indication of a local operation problem.

It is to be understood that even though a rupture is detected for a filter section 57 causing a locally higher concentration of gaseous pollutants, the overall impact of this local defect as compared to the full operational condition of the filter device 50 as such, must be evaluated and appropriate action determined.

Now turning to Fig. 7, the use of a collector 80 together with the present invention will be disclosed. A collector 80 can be used to collect gas in at least one measuring point 59 and transport the same to at least one sensor 60. Such sensor 60 is positioned inside the filter device 50. The use of a collector 80 is favourable by way of example when the conditions inside the filter device 50 are of such character that it can affect the functionality of any sensors 60 arranged inside 50a the filter device 50. One such situation is when the process gas has a very high temperature.

The collector 80 in the illustrated embodiment is disclosed as a pipe system 81 provided with a plurality of inlets 82 and valves (not shown) allowing a flow of process gas to the sensor 60 positioned outside the filter device 50. The collector 80 can be stationary, but it can also be movable (as indicated by the arrows) across the filter device 50, the movement being made between individual filter sections 57 or between groups A of filter sections 57. Accordingly, the measuring points 59 will be determined by the position of the inlets 82 as the collector 80 moves.

Although not illustrated, it is to be understood that the pipe system 81 used for the collector 80 can be combined with the pipe system 71 used for the pulse cleaning system 70. In case one pipe system is adapted to serve both purposes, such pipe system is preferably supplied with a number of valves 74 to be set in order to make sure that the flow direction of pulsed air P can be operated to be opposed a flow direction of collected gas. It is also possible to use a pipe system having dual compartments, one adapted for pulse cleaning and one adapted for collection of gas.

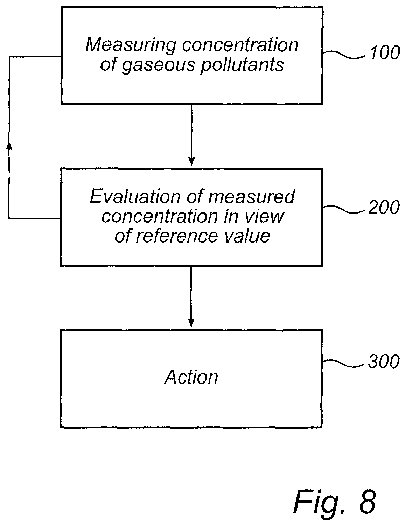

With reference to the flow chart illustrated in Fig. 8, the method for detecting a local operation condition in an individual filter section 57 in a filter device 50 comprising at least two filter sections 57 will be briefly described. The flow chart of Fig. 8 relates to a system wherein at least one sensor 60 is operative for measuring the concentration of at least one gaseous pollutant in at least one measuring point 59.

By using said at least one sensor 60, the concentration of said at least one gaseous pollutant is measured 100 at said at least one measuring point 59.

Measurement information from sensor 60 is transferred to the controller 61, which uses the measurement information 200 to determine the local operation condition in said individual filter section 57. The controller 61 compares the measurement information for the concentration of said at least one gaseous pollutant to a reference value RV. The reference value RV is indicative of the appropriate or desired amount of removal of said at least one gaseous pollutant by said individual filter section 57.

Depending on the result of the comparison between the measurement information and the reference value RV, a suitable action 300 can be initiated by the controller 61. One example of such activity is uponconfirmation that the local operation condition in the filter section 57 is appropriate or desirable and the filter device 50 is working properly, initiating the timing for the next comparison. Another example is upon a determination of needed maintenace for an individual filter section 57 or a group of filter sections 57, initiating maintenance. Yet other examples are upon a determination of improper or undesirable working of the filter section 57 connected to the specific measuring point 59, initiating cleaning or initiating an increased supply of absorbent material to the inlet zone 52. Another example of an action that may be initiated by the controller 61 includes controlling the pulse strategy in any pulse cleaning being used. The pulse strategy can by way of example determine the intervals between pulses, the power of the pulses or whether or not pulsing should continue. Yet another example of an action that may be initiated by the controller 61 includes channeling a flow of polluted gas to other portions of the filter section 57 having a better operation condition.

For example, the system or method is applicable to a plurality of filter devices 50 arranged in a parallel relation to each other with respect to the direction of flow of the process gas. An advantage of this embodiment is that maintenance and repair operations can be performed on one filter device 50, while at least the other filter devices 50 remain in operation.

While the filter sections 57 are described herein and are illustrated in the drawings as being separate filter sections 57, which are arranged in parallel with respect to the direction of flow of the process gas across the partition wall 55, it will be appreciated that it is also possible without departing from the essence of the present invention to utilize only one single filter section 57, which embodies one housing 90 that consists of several compartments 90a, the latter each being independent one from another and being arranged in parallel relation with respect to the direction of flow of the process gas, such that each such individual compartment 90a performs essentially the same function as that which has been described hereinbefore with respect to each of the individual filter sections 57. Furthermore, it will be appreciated that other types of filter sections 57 than bag filters may also equally well be utilized without departing from the essence of the present invention. Examples of such other filter devices 50 include, but are not limited to, electrostatic precipitators, cyclones, ceramic filters, other types of fabric filters, etc. Furthermore, it is also possible without departing from the essence of the present invention to utilize a filter device 50 that combines several filter techniques, such as, for example, a filter device 50 comprising a combination of a cyclone and a bag house.

## Claims

1. A filter device equipped with a system for detecting a local operation condition in an individual filter section (57) of the filter device (50) , the filter device comprising a housing (90), an inlet (51 a), an interior inlet zone (52), an outlet (54), an outlet zone (53) with interior (90a) of housing (90), the inlet zone (52) being physically separated from outlet zone (53) by by a partition wall (55), the partition wall (55) has a plurality of through openings (56) containing a filter section (57) in the form of a filter bag (57a),
the system comprising at least one sensor (60) for measuring the concentration of at least one gaseous pollutant in at least one measuring point (59) to obtain measurement information, the measuring point (59) being positioned in the outlet zone (53, CG zone) and a controller (61) for receiving measurement information from the at least one sensor (60),
**characterized in that**
at least one measuring point (59) for each individual filter section (57), one sensor being dedicated to serve a plurality of measuring points (59), wherein a collector (80) is provided that is configured to collect gas in at least one measuring point (59) and to transport the same to at least one sensor (60) positioned outside the filter device (50),
the collector (80) having a plurality of inlets (82) and valves configured to allow a flow of gas to the sensor (60) positioned outside the filter device (50),
said controller (61) being configured to use measurement information from the respective sensor (60) to determine a local operation condition in the individual filter section (57).

2. The filter device according to claim 1, wherein the controller (61) compares measurement information (AV) to a reference value (RV).

3. The filter device according to any of the preceding claims, further comprising a pulse cleaning system (70) for cleaning the individual filter sections (57) by applying at least one cleaning pulse (P) of air, wherein
the at least one sensor (60) measures a concentration of the at least one gaseous pollutant for activation of said pulse cleaning system.

4. The filter device according to claim 3, wherein the pulse cleaning system (70) provides a cleaning pulse (P) to each of the at least two filter sections (57), whereby said controller (61) determines the local operation condition of a cleaned first individual filter section before initiating the pulse cleaning system to provide a cleaning pulse to a second individual filter section.

5. A method for detecting a local operation condition in an individual filter section (57) of a filter device according to one of the preceding claims, the method comprising
measuring, using the at least one sensor (60), the concentration of the at least one gaseous pollutant in at least one measuring point (59) in the individual filter section (57) to obtain measurement information, and
utilizing the measurement information to determine the local operation condition in the individual filter section (57).

6. The method of claim 5, further comprising comparing the measurement information (AV) to a reference value (RV).

7. The method of any of claims 5-6, further comprising cleaning an individual filter section (57) by operating a pulse cleaning system (70), the pulse cleaning being performed before measuring the concentration of gaseous pollutant in the individual filter section (57).

8. The method according to claim 7, wherein the pulse cleaning system provides a cleaning pulse (P) to a first filter section (57), whereby said sensor (60) measures the concentration of gaseous pollutant in the first filter section (57), before subjecting a subsequent filter section (57) to a cleaning pulse (P).

9. The method according to any of claims 5-8, the method further comprising controlling a supply of absorbent material to the filter device (50) based on measurement information.

## Patentansprüche

1. Filtervorrichtung, die mit einem System zum Detektieren einer lokalen Betriebsbedingung in einem einzelnen Filterabschnitt (57) der Filtervorrichtung (50) ausgerüstet ist, wobei die Filtervorrichtung Folgendes umfasst
ein Gehäuse (90), einen Einlass (51a), eine innere Einlasszone (52), einen Auslass (54), eine Auslasszone (53) mit einem Inneren (90a) des Gehäuses (90), wobei die Einlasszone (52) durch eine Trennwand (55) von der Auslasszone (53) physikalisch getrennt ist, wobei die Trennwand (55) mehrere Durchgangsöffnungen (56) aufweist, die einen Filterabschnitt (57) in der Form eines Filterbeutels (57a) enthalten,
wobei das System wenigstens einen Sensor (60) zum Messen der Konzentration wenigstens eines gasförmigen Schadstoffs an wenigstens einem Messpunkt (59), um Messinformationen zu erhalten, wobei der Messpunkt (59) in der Auslasszone (53, CG-Zone) positioniert ist, und einen Controller (61) zum Empfangen der Messinformationen von dem wenigstens einen Sensor (60) umfasst,
**gekennzeichnet durch**
wenigstens einen Messpunkt (59) für jeden einzelnen Filterabschnitt (57), wobei ein Sensor dediziert ist, mehreren Messpunkten (59) zu dienen, wobei ein Sammler (80) bereitgestellt ist, der konfiguriert ist, an wenigstens einem Messpunkt (59) Gas zu sammeln und dasselbe zu wenigstens einem Sensor (60), der außerhalb der Filtervorrichtung (50) positioniert ist, zu transportieren,
wobei der Sammler (80) mehrere Einlässe (82) und Ventile, die konfiguriert sind, eine Gasströmung zu dem Sensor (60), der außerhalb der Filtervorrichtung (50) positioniert ist, zu ermöglichen, aufweist und
wobei der Controller (61) konfiguriert ist, die Messinformationen von dem jeweiligen Sensor (60) zu verwenden, um eine lokale Betriebsbedingung in dem einzelnen Filterabschnitt (57) zu bestimmen.

2. Filtervorrichtung nach Anspruch 1, wobei der Controller (61) die Messinformationen (AV) mit einem Referenzwert (RV) vergleicht.

3. Filtervorrichtung nach einem der vorhergehenden Ansprüche, die ferner ein Impulsreinigungssystem (70) zum Reinigen der einzelnen Filterabschnitte (57) durch das Anwenden wenigstens eines Reinigungsimpulses (P) aus Luft umfasst, wobei der wenigstens eine Sensor (60) eine Konzentration des wenigstens einen gasförmigen Schadstoffs zur Aktivierung des Impulsreinigungssystem misst.

4. Filtervorrichtung nach Anspruch 3, wobei das Impulsreinigungssystem (70) für jeden der wenigstens zwei Filterabschnitte (57) einen Reinigungsimpuls (P) bereitstellt, wobei der Controller (61) die lokale Betriebsbedingung eines gereinigten ersten einzelnen Filterabschnitts vor dem Starten des Impulsreinigungssystems, um für einen zweiten einzelnen Filterabschnitt einen Reinigungsimpuls bereitzustellen, bestimmt.

5. Verfahren zum Detektieren einer lokalen Betriebsbedingung in einem einzelnen Filterabschnitt (57) einer Filtervorrichtung nach einem der vorhergehenden Ansprüche, wobei das Verfahren Folgendes umfasst:
Messen unter Verwendung des wenigstens einen Sensors (60) der Konzentration des wenigstens einen gasförmigen Schadstoffs an wenigstens einem Messpunkt (59) in dem einzelnen Filterabschnitt (57), um Messinformationen zu erhalten, und
Verwenden der Messinformationen, um die lokale Betriebsbedingung in dem einzelnen Filterabschnitt (57) zu bestimmen.

6. Verfahren nach Anspruch 5, das ferner das Vergleichen der Messinformationen (AV) mit einem Referenzwert (RV) umfasst.

7. Verfahren nach einem der Ansprüche 5-6, das ferner das Reinigen eines einzelnen Filterabschnitts (57) durch das Betreiben eines Impulsreinigungssystems (70) umfasst, wobei die Impulsreinigung vor dem Messen der Konzentration des gasförmigen Schadstoffs in dem einzelnen Filterabschnitt (57) ausgeführt wird.

8. Verfahren nach Anspruch 7, wobei das Impulsreinigungssystem für einen ersten Filterabschnitt (57) einen Reinigungsimpuls (P) bereitstellt, wobei der Sensor (60) die Konzentration des gasförmigen Schadstoffs in dem ersten Filterabschnitt (57) misst, bevor ein nachfolgender Filterabschnitt (57) einem Reinigungsimpuls (P) ausgesetzt wird.

9. Verfahren nach einem der Ansprüche 5-8, wobei das Verfahren ferner das Steuern einer Zufuhr eines Absorptionsmaterials zu der Filtervorrichtung (50) basierend auf den Messinformationen umfasst.

## Revendications

1. Dispositif de filtration équipé d'un système de détection d'un état de fonctionnement local dans une section individuelle (57) de filtration du dispositif de filtration (50), le dispositif de filtration comportant
une enceinte (90), une entrée (51a), une zone (52) d'entrée d'intérieur, une sortie (54), une zone (53) de sortie avec l'intérieur (90a) de l'enceinte (90), la zone (52) d'entrée étant séparée physiquement de la zone (53) de sortie par une cloison séparatrice (55), la cloison séparatrice (55) présentant une pluralité d'ouvertures débouchantes (56) contenant une section (57) de filtration sous la forme d'un sac filtrant (57a),
le système comportant au moins un capteur (60) servant à mesurer la concentration d'au moins un polluant gazeux en au moins un point (59) de mesure pour obtenir des informations de mesure, le point (59) de mesure étant positionné dans la zone de sortie (53, zone CG) et une commande (61) servant à recevoir des informations de mesure en provenance du ou des capteurs (60),
**caractérisé en ce que**
au moins un point (59) de mesure pour chaque section individuelle (57) de filtration, un capteur étant dédié pour desservir une pluralité de points (59) de mesure, un collecteur (80) étant prévu, qui est configuré pour recueillir du gaz en au moins un point (59) de mesure et pour le transporter jusqu'à au moins un capteur (60) positionné à l'extérieur du dispositif de filtration (50),
le collecteur (80) présentant une pluralité d'entrées (82) et des soupapes configurées pour permettre un écoulement de gaz jusqu'au capteur (60) positionné à l'extérieur du dispositif de filtration (50),
ladite commande (61) étant configurée pour utiliser des informations de mesure provenant du capteur (60) respectif pour déterminer un état de fonctionnement local dans la section individuelle (57) de filtration.

2. Dispositif de filtration selon la revendication 1, la commande (61) comparant des informations de mesure (AV) à une valeur de référence (RV).

3. Dispositif de filtration selon l'une quelconque des revendications précédentes, comportant en outre un système (70) de nettoyage par impulsions servant à nettoyer les sections individuelles (57) de filtration en appliquant au moins une impulsion (P) de nettoyage d'air, le ou les capteurs (60) mesurant une concentration du ou des polluants gazeux en vue de l'activation dudit système de nettoyage par impulsions.

4. Dispositif de filtration selon la revendication 3, le système (70) de nettoyage par impulsions fournissant une impulsion (P) de nettoyage à chacune desdites au moins deux sections (57) de filtration, ladite commande (61) déterminant ainsi l'état de fonctionnement local d'une première section individuelle nettoyée de filtration avant de déclencher le système de nettoyage par impulsions pour fournir une impulsion de nettoyage à une deuxième section individuelle de filtration.

5. Procédé de détection d'un état de fonctionnement local dans une section individuelle (57) de filtration d'un dispositif de filtration selon l'une des revendications précédentes, le procédé comportant les étapes consistant à
mesurer, à l'aide du ou des capteurs (60), la concentration du ou des polluants gazeux en au moins un point (59) de mesure dans la section individuelle (57) de filtration pour obtenir des informations de mesure,
et
utiliser les informations de mesure pour déterminer l'état de fonctionnement local dans la section individuelle (57) de filtration.

6. Procédé selon la revendication 5, comportant en outre l'étape consistant à comparer les informations de mesure (AV) à une valeur de référence (RV).

7. Procédé selon l'une quelconque des revendications 5 à 6, comportant en outre l'étape consistant à nettoyer une section individuelle (57) de filtration en actionnant un système (70) de nettoyage par impulsions, le nettoyage par impulsions étant effectué avant de mesurer la concentration de polluant gazeux dans la section individuelle (57) de filtration.

8. Procédé selon la revendication 7, le système de nettoyage par impulsions fournissant une impulsion (P) de nettoyage à une première section (57) de filtration, ledit capteur (60) mesurant ainsi la concentration de polluant gazeux dans la première section (57) de filtration, avant de soumettre une section (57) de filtration suivante à une impulsion (P) de nettoyage.

9. Procédé selon l'une quelconque des revendications 5 à 8, le procédé comportant en outre l'étape consistant à commander une amenée de matériau absorbant au dispositif de filtration (50) d'après des informations de mesure.
